# EUROPÄISCHE PATENTSCHRIFT

(11) **EP 0 911 658 B1**
(45) Veröffentlichungstag und Bekanntmachung des Hinweises auf die Patenterteilung: **04.02.2004**
(21) Anmeldenummer: 98119276.8
(22) Anmeldetag: 13.10.1998
(51) Int. Cl.: G02B 6/138, G02B 6/122, G02B 6/43

(54) **Verfahren zur Herstellung von Wellenleiterstrukturen mit optischen Komponenten**
Fabrication method of wavegiude structures with optical components
Procédé de fabrication de structures de guide d'onde comprenant des composants optiques

(30) Priorität: 22.10.1997 DE 19746508
(43) Veröffentlichungstag der Anmeldung: 28.04.1999
(60) Teilanmeldung: 03004048.9
(73) Patentinhaber: DaimlerChrysler AG, 70567 Stuttgart (DE)
(72) Erfinder: Moisel, Jörg Dr., 89073 Ulm (DE)

(56) Entgegenhaltungen:
- WO-A-96/07117
- GB-A- 2 155 194
- US-A- 5 473 721
- L.BALLIET ET AL.: "Module-to-module communication via fiber-optic piping" IBM TECHNICAL DISCLOSURE BULLETIN., Bd. 22, Nr. 8b, Januar 1980, Seiten 3519-3520, XP002092656 NEW YORK US
- R.WIESMANN ET AL.: "Monomode polymer waveguides with integrated mirrors" 22ND EROPEAN CONFERENCE ON OPTICAL COMMUNICATION, Bd. 2, 15. - 19. September 1996, Seiten 265-268, XP002092657 oslo,norway

## Beschreibung

Die Erfindung betrifft ein Verfahren zur Herstellung von Wellenleiterstrukturen nach dem Oberbegriff des Patentanspruchs 1ⱼ , wie es aus der US-A-5 473 721 bekannt ist.

Die Erfindung findet u.a. Verwendung in der optischen Datenverarbeitung, insbesondere in der optischen Nachrichtenübertragung, da für diesen Bereich Wellenleiter benötigt werden, bei denen die Wellen möglichst verlustarm ein- und ausgekoppelt werden.

Es ist für Monomode-Wellenleiter bekannt, für die Umlenkung von Wellen aus der Wellenleiterebene Spiegelflächen einzusetzen, die durch anisotropes Ätzen in Silizium und anschließendes Verspiegeln der Flächen hergestellt werden. Dazu werden z.B. an den Endflächen der Wellenleiter V-Nuten ( J.Moisel et al. Appl.Optics 1997, Vol.36 No.20) oder entsprechende Silizium-Vorformen (R.Wiesmann et al., Proc.Europ.Conf. on Optical Communication, 1996, S. 2265 bis 2268)hergestellt, die verspiegelt werden. Dies hat jedoch den Nachteil, daß die Umlenkrichtung durch die Kristallebenen des Silizium bestimmt werden und deshalb lediglich Umlenkungen von ca. 70° oder weniger möglich sind. Weiterhin ist nachteilig, daß die Verluste bei der Ein- und Auskopplung relativ hoch sind, da die Wellen an der Oberkante der Spiegel vorbeilaufen.
In der US 5 473 721 ist eine optische Leiterplatte beschrieben, die durch strukturiiertes Fräsen eines Trägerkörpers mit anschließender Nachbehandlung der Fräskanale und Einbringen des Wellenleitermaterials mit nachfolgender Aushärtung durch UV-Belichtung hergestellt wird. Nachteilig bei dieser Lösung ist der erhebliche apparative Aufwand sowie die mangelnde Flexibilität bei der Einbringung optischer Komponenten in die Struktur.
Aus der GB-A-2 155 194 ist bekannt, unter Verwendung von festem homogenen photochromen Material durch Bestrahlung mittels UV-Laser Wellenleiterstrukturen zur schaffen. Durch die Bestrahlung des photochromen Materials wird die Farbe bzw. der Brechungsindex des Materials verändert, wodurch die Wellenleiterstruktur abschließend geschaffen wird. Diese Wellenleiterstrukturen zeigen keine Möglichkeit einer differenzierten Auskopplung der Lichtsignale.
Der Erfindung liegt deshalb die Aufgabe zugrunde, ein Verfahren zur Herstellung von Wellenleiterstukturen mit optischen Komponenten für die Ein- und Auskopplung von Wellen anzugeben, wodurch die Wellen verlustarm ein- und ausgekoppelt werden und beliebige Kopplungen möglich sind.

Die Erfindung ist im den Patentanspruch 1 beschrieben. Vorteilhafte Ausgestaltungen und/oder Weiterbildungen sind in den Unteransprüchen enthalten.

Bei dem erfindungsgemäßen Verfahren werden vor der Herstellung der Wellenleiter die optischen Komponenten, z.B. Umlenkspiegel auf einem Träger aufgebracht und nachfolgend wird die Wellenleiterstruktur mittels Direktschreiben mit einer inkohärenten Lichtquelle auf dem Träger hergestellt. Dazu wird entweder eine flüssige, lichtempfindlichen Schicht aus z.B. einem Polymer auf dem Träger aufgebracht und anschließend werden die optischen Komponenten in die flüssige Schicht eingebracht oder die optischen Komponenten werden an vorgegebenen Auskoppelstellen direkt auf dem Träger aufgebracht.

Die Erfindung hat den Vorteil, daß Multimode-Wellenleiter herstellbar sind, die eine verlustarme Ankopplung von Prozessorboards an optische Backplane-Leisten gewährleisten.
Ein weiterer Vorteil besteht darin, daß die optischen Komponenten in herkömmlicher Schleif- und Poliertechnik hergestellt werden können und sich damit beliebige Umlenkwinkel realisieren lassen.
Durch die Einbettung der optischen Komponenten in die Wellenleiterstruktur werden vorteilhafterweise zusätzliche Grenzflächen vermieden, an denen Verluste durch Reflexionen auftreten können. Durch die Einbettung der optischen Komponenten in den Wellenleiter erreicht man weiterhin einen Schutz der optischen Komponenten vor Umwelteinflüssen.

Die Erfindung wird im folgenden anhand von Ausführungsbeispielen beschrieben unter Bezugnahme auf schematische Zeichnungen.

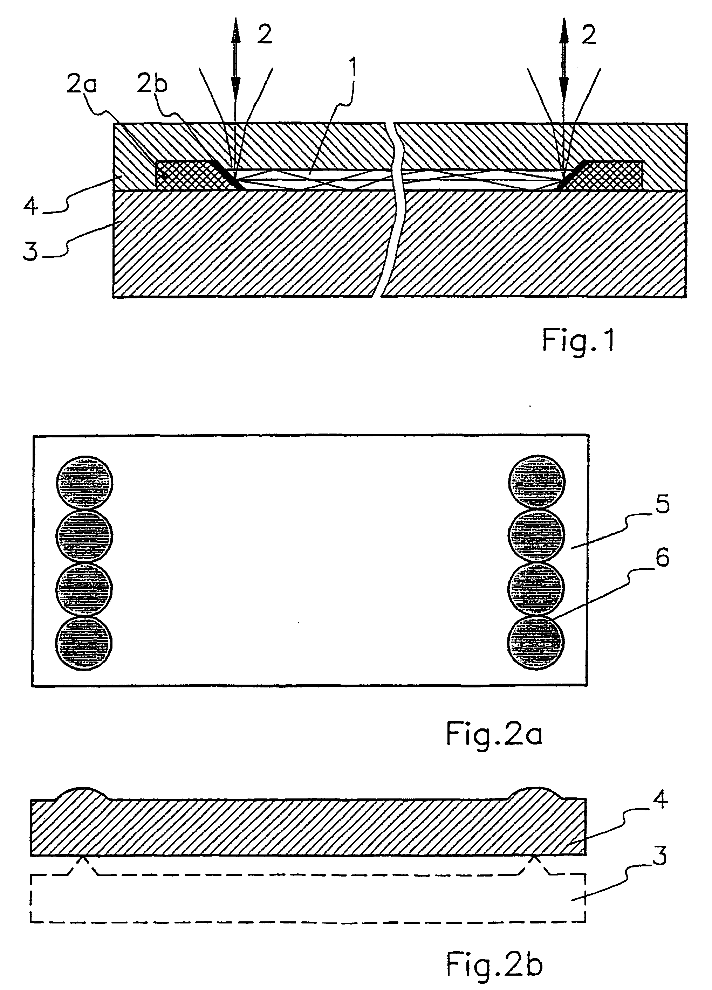

In Fig. 1 ist in einem ersten Ausführungsbeispiel ein Wellenleiter 1 mit integrierten Auskoppelspiegeln 2 als optischen Komponenten dargestellt. Auf einem Träger 3 werden die Auskoppelspiegel 2, die z.B. aus einem Spiegelträger 2a und einer Spiegelschicht 2b bestehen, auf vorgegebenen Auskoppelstellen aufgebracht. Anschließend wird zwischen den Spiegeln eine flüssige, lichtempfindliche Schicht, z.B. eine Polymerschicht mit einem Brechungsindex n1 abgeschieden und die optischen Komponenten werden in die Schicht eingebettet. Der Träger 3 besitzt einen Brechungsindex n3, der kleiner ist als der Brechungsindex n1. Es wird anschließend die Wellenleiterstruktur mittels Direktschreiben hergestellt. Dazu wird eine inkohärente Lichtquelle verwendet, deren Bild in dem lichtempfindlichen, flüssigen Material abgebildet wird. Dabei werden Träger und das Bild der Lichtquelle relativ zueinander bewegt, derart, daß die Spur des Bildes in dem beschichteten Trägermaterial den Wellenleiter ergibt. Das Material der lichtempfindlichen Schicht wird durch die Belichtung ausgehärtet. Nach erfolgter Belichtung wird das nicht ausgehärtete Material entfernt. Auf den derart strukturierten Träger wird anschließend eine Deckschicht 4 abgeschieden, die z.B. aus einem Polymer besteht, das einen Brechnungsindex n2 besitzt. Dabei muß der Brechungsindex n2 der Deckschicht kleiner sein als der Brechungsindex n1 der lichtempfindlichen Schicht, um die Wellen zwischen den Spiegeln zu führen.
Die zur Kollimation benötigten Linsen sind außerhalb des strukturierten Trägers zwischen strukturiertem Träger und Teilnehmerboard angeordnet.

In einem weiteren Ausführungsbeispiel wird auf dem Träger 3 zuerst eine flüssige, lichtempfindliche Schicht aus einem Polymer mit einem Brechungsindex n1 aufgebracht. Die optischen Komponenten werden in die flüssige, lichtempfindliche Schicht an vorgegebenen Auskoppelstellen eingelassen. Dazu werden die optischen Komponenten beispielsweise mittels einer Vorrichtung angesaugt und dann in die flüssige Schicht eingedrückt. Es erfolgt die Herstellung der Wellenleiterstruktur in der flüssigen, lichtempfindlichen Schicht mittels Direktschreiben. Das nicht ausgehärtete Material der Polymerschicht wird anschließend entfernt und auf den strukturierten Träger wird eine Deckschicht aufgebracht.

Dadurch, daß die Oberflächen der optischen Komponenten in die Wellenleiter eingebettet sind, werden sie vor Umwelteinflüssen geschützt und es werden keine weiteren Grenzflächen gebildet, an denen Verluste durch Reflexionen auftreten.

Bei einer Vielzahl von Wellenleitern, z.B. für die Herstellung eines Datenbuses, ist es vorteilhaft, den Wellenleiterträger aus einem Spritzgußteil herzustellen, das eine Spiegel- und Wellenleiterstruktur enthält. Anstelle der Deckschicht wird dann eine Deckplatte 4 auf den mit optischen Komponenten und Wellenleiter strukturierten Träger 3 aufgebracht (Fig. 2a). Die Deckplatte 4 besteht z.B. aus einem Spritzgußteil 5, das die zur Kollimation benötigten Linsen 6 enthält (Fig. 2b).

Da die Umlenkspiegel unabhängig vom Herstellungsprozeß der Wellenleiter auf dem Trägermaterial angeordnet werden, sind beliebige Umlenkwinkel erreichbar. In Fig. 1 sind die Spiegel beispielsweise mit einer Spiegelneigung von 45° angeordnet und dadurch wird eine Umlenkung der Wellen von 90° erzielt.

Durch die Einbettung der optischen Komponenten in die Wellenleiterstruktur ist keine nachträgliche Endflächenpräparation der Wellenleiter und keine zusätzliche Justage der optischen Komponenten notwendig.

Die Erfindung ist nicht auf die beschriebenen Ausführungsbeispiele beschränkt, sondern es sind verschiedene Ausgestaltungen von Träger und Deckschicht bzw. Deckplatte denkbar. Insbesondere erlaubt das Verfahren des Direktschreibens von Wellenleiterstrukturen, Wellenleiter auf beliebigen Flächen herzustellen, wobei nach Aufbringen der Deckschicht oder Deckplatte wiederum eine ebene Fläche erzielt wird, auf die weitere Wellenleiterstrukturen oder Träger mit integrierten optischen Komponenten aufgebracht werden können. Auf diese Weise lassen sich kompakte dreidimensionale Wellenleiterstrukturen herstellen.

## Patentansprüche

1. Verfahren zur Herstellung von Wellenleiterstrukturen (1) mit optischen Komponenten (2) auf einem Träger (13), wobei auf dem Träger lichtablenkende optische Komponenten an vorgegebenen Auskoppelstellen aufgebracht werden, und auf dem Träger eine flüssige, lichtempfindliche Schicht abgeschieden wird, derart, daß die optischen Komponenten in der flüssigen, lichtempfindlichen Schicht eingebettet werden, und daß anschließend die Wellenleiterstrukturen zwischen den optischen Komponenten in der flüssigen, lichtempfindlichen Schicht hergestellt werden **dadurch gekennzeichnet, daß** der letzte Schritt durch Direktschreiben mittels einer inkohärenten Lichtquelle durch geführt wird.

2. Verfahren nach Anspruch 1, **dadurch gekennzeichnet, daß** lichtablenkende optischen Komponenten als Spiegel zur Auskopplung oder Einkopplung von Lichtsignalen aus der oder in die Wellenleiterstruktur ausgebildet sind.

3. Verfahren nach Anspruch 1, **dadurch gekennzeichnet, daß** die optischen Komponenten derart in die Wellenleiterstruktur eingebettet werden, daß die Oberflächen der optischen Komponenten keine zusätzlichen Grenzflächen bilden, an denen Verluste durch Reflexionen auftreten.

4. Verfahren nach Anspruch 3, **dadurch gekennzeichnet, daß** die flüssige, lichtempfindliche Schicht auf die auf dem Träger direkt aufgebrachten optischen Komponenten abgeschieden wird.

5. Verfahren nach Anspruch 3, **dadurch gekennzeichnet, daß** die flüssige, lichtempfindliche Schicht auf dem Träger aufgebracht wird, und daß anschließend die optischen Komponenten in die flüssige, lichtempfindliche Schicht eingebracht werden.

6. Verfahren nach einem der vorhergehenden Ansprüche, **dadurch gekennzeichnet, daß** nach der Herstellung der Wellenleiterstruktur die nicht ausgehärteten Bereiche der lichtempfindlichen Schicht entfernt werden.

7. Verfahren nach einem der vorhergehenden Ansprüche, **dadurch gekennzeichnet, daß** eine Deckschicht auf die Wellenleiterstruktur und die optischen Komponenten abgeschieden wird.

8. Verfahren nach einem der vorhergehenden Ansprüche 1 bis 6, **dadurch gekennzeichnet, daß** eine Deckplatte auf die Wellenleiterstruktur und die optischen Komponenten aufgebracht wird.

9. Verfahren nach einem der vorhergehenden Ansprüche, **dadurch gekennzeichnet, daß** der Träger als Kunststoffteil gefertigt wird, in dem die Wellenleiter und die optischen Komponenten integriert werden.

10. Verfahren nach Anspruch 8, wobei die Deckplatte mit integrierten Linsen versehen ist.

## Claims

1. Method of fabricating waveguide structures (1) with optical components (2) on a support (3), light-deflecting optical components being applied on the support at predetermined coupling-out points, and a liquid, light-sensitive layer being deposited on the support in such a way that the optical components are embedded in the liquid, light-sensitive layer, and the waveguide structures subsequently being fabricated between the optical components in the liquid, light-sensitive layer, **characterized in that** the last step is carried out by direct writing by means of an incoherent light source.

2. Method according to Claim 1, **characterized in that** light-deflecting optical components are formed as mirrors for coupling out or coupling in light signals from or into the waveguide structure.

3. Method according to Claim 1, **characterized in that** the optical components are embedded into the waveguide structure in such a way that the surfaces of the optical components do not form additional interfaces at which losses occur due to reflections.

4. Method according to Claim 3, **characterized in that** the liquid, light-sensitive layer is deposited onto the optical components applied directly on the support.

5. Method according to Claim 3, **characterized in that** the liquid, light-sensitive layer is applied on the support, and that the optical components are subsequently introduced into the liquid, light-sensitive layer.

6. Method according to one of the preceding claims, **characterized in that**, after the fabrication of the waveguide structure, the non-cured regions of the light-sensitive layer are removed.

7. Method according to one of the preceding claims, **characterized in that** a top layer is deposited on to the waveguide structure and the optical components.

8. Method according to one of the preceding Claims 1 to 6, **characterized in that** a top plate is applied to the waveguide structure and the optical components.

9. Method according to one of the preceding claims, **characterized in that** the support is produced as a plastic part in which the waveguides and the optical components are integrated.

10. Method according to Claim 8, the top plate being provided with integrated lenses.

## Revendications

1. Procédé pour la fabrication de structures de guide d'ondes (1) avec des composants optiques (2) sur un support (3), les composants optiques déviant la lumière étant disposés en des positions de découplage prédéfinies sur le support, et une couche fluide, sensible à la lumière étant déposée sur le support, de telle sorte que les composants optiques soient encastrés dans ladite couche fluide, sensible à la lumière et qu'ensuite les structures de guide d'ondes (1) soient fabriquées entre les composants optiques, dans la couche fluide, sensible à la lumière, **caractérisé en ce que** la dernière étape est réalisée selon une méthode d'exposition directe et de reproduction, par l'intermédiaire d'une source de lumière incohérente.

2. Procédé selon la revendication 1, **caractérisé en ce que** les composants optiques déviant la lumière sont des miroirs pour le découplage ou le couplage de signaux lumineux, dans ou hors de la structure de guide d'ondes.

3. Procédé selon la revendication 1, **caractérisé en ce que** les composants optiques sont encastrés dans la structure de guide d'ondes de telle sorte que les surfaces des composants optiques ne constituent pas de surfaces additionnelles de séparation, le long desquelles des pertes par réflexion se produiraient.

4. Procédé selon la revendication 3, **caractérisé en ce que** la couche fluide, sensible à la lumière est déposée sur les composants optiques appliqués directement sur le support.

5. Procédé selon la revendication 3, **caractérisé en ce que** la couche fluide, sensible à la lumière est déposée sur le support et qu'ensuite les composants optiques sont introduits dans la couche fluide, sensible à la lumière.

6. Procédé selon l'une des revendications précédentes, **caractérisé en ce qu'**après la fabrication de la structure de guide d'ondes, les zones non durcies de la couche fluide, sensible à la lumière sont éliminées.

7. Procédé selon l'une des revendications précédentes, **caractérisé en ce qu'**une couche de recouvrement est déposée sur la structure de guide d'ondes et sur les composants optiques.

8. Procédé selon l'une des revendications précédentes 1 à 6, **caractérisé en ce qu'**une plaque de recouvrement est disposée sur la structure de guide d'ondes et sur les composants optiques.

9. Procédé selon l'une des revendications précédentes, **caractérisé en ce que** le support est produit sous forme de pièce en plastique, dans laquelle le guide d'ondes et les composants optiques sont intégrés.

10. Procédé selon la revendication 8, dans lequel la plaque de recouvrement est munie de lentilles intégrées.
